## Europäisches Patentamt

## European Patent Office

## Office européen des brevets

(19)

(11) Veröffentlichungsnummer: **0 241 586**
**B1**

(12) **EUROPÄISCHE PATENTSCHRIFT**

(45) Veröffentlichungstag der Patentschrift:
07.03.90

(51) Int. Cl.⁴: **C08G 65/46**

(21) Anmeldenummer: **86115328.6**

(22) Anmeldetag: **05.11.86**

(54) Verfahren zur Aufkonzentrierung von PPE-Lösungen.

(30) Priorität: **14.01.86 DE 3600754**

(43) Veröffentlichungstag der Anmeldung:
**21.10.87 Patentblatt 87/43**

(45) Bekanntmachung des Hinweises auf die Patenterteilung:
**07.03.90 Patentblatt 90/10**

(84) Benannte Vertragsstaaten:
**AT BE CH DE FR GB IT LI NL SE**

(56) Entgegenhaltungen:
**DE-A- 3 131 440**
**DE-A- 3 315 803**

(73) Patentinhaber: **HÜLS AKTIENGESELLSCHAFT,
Patentabteilung / PB 15 - Postfach 13 20,
D-4370 Marl 1(DE)**

(72) Erfinder: **Lohrengel, Gregor, Dr., Aktienstrasse 194,
D-4300 Essen 11(DE)**

## Beschreibung

Bei der oxidativen Kupplungsreaktion von 2,6-diorthosubstituierten Phenolen fallen Lösungen von Polyphenylenethern (PPE) in organischen Lösemitteln an. Die Konzentration der erhaltenen Lösungen ist je nach Reaktionsansatz und -bedingungen gewissen Schwankungen unterworfen.

Nach dem heutigen Stand der Technik wird das Polymere nicht mehr ducht Zugabe eines sogenannten Antilösemittels gefällt, sondern durch Aufkonzentrierung gewonnen, wobei bereits in diesem Schritt andere Polymere, wie z. B. Polystyrole und Zusatzstoffe zugesetzt werden können. Die Aufkonzentrierung ist schwierig, da die Lösemittelreste aus den hochviskosen Lösungen nur schwer zu entfernen sind. Die Anwendung höherer Temperaturen über längere Zeiträume führt zu Produktschädigungen, die vermieden werden müssen.

Gerade um das Polymere bei der weiteren Verarbeitung nicht unnötigen Temperaturbelastungen aussetzen zu müssen, ist es notwendig, PPE-Lösungen konstanter Konzentration herzustellen.

Es sind verschiedene Verfahren zur Aufkonzentrierung von Lösungen organischer Kunststoffe bekannt.

Beispielsweise kann man eine Flash-Verdampfungsstufe vorsehen und diese entweder im geraden Durchgang (siehe z.B. WO-A 8 000 845, JP-A 54 142 292 und EP-A 103 462) oder im Kreissystem (siehe z.B. Kirk-Othmer, Encyclopedia of Chemical Technology, 3rd Ed., Vol. 9, Wiley 1980, S. 472–478) betrieben. Die erste Verfahrensvariante hat den Nachteil, daß sich die Schwankungen in der Konzentration der Ausganglösung verstärkt auf die erhaltenen aufkonzentrierten Lösungen auswirken. Die zweite Variante erfordert aufgrund der hohen Viskosität der PPE-Lösungen die Anwendung von Temperaturen, die um über 40°C über denen des Siedepunkts des Lösemittels bei Normaltemperatur liegen; ungünstig wirkt sich die lange Verweilzeit des Produktes aus. Daher wird die zweite Variante in der Regel nur zur Aufkonzentrierung von Lösungen niedermolekularer Stoffe benutzt.

In der DE-OS 31 31 440 wird ein Verfahren beschrieben, bei dem Lösungen von PPE mit anderen Polymeren wie z. B. Styrolpolymerisaten versetzt und in einem Mehrstufenprozeß eingedampft werden. Ein Nachteil dieses Verfahrens besteht darin, daß man die Polymermischung von erheblichen Mengen Lösemittel befreien muß, was insbesondere große Apparatedimensionen verlangt.

Die Verfahren der DE-OSS 33 15 802 und 33 15 803, die demgegenüber verbessert sind, bestehen nun darin, verdünnte PPE-Lösungen in einem Verdampfungsprozeß auf eine Konzentration von mindestens 60 % aufzukonzentrieren und anschließend unter Zusatz von Kunststoffadditiven bzw. Schmelzen anderer Polymerer weiter zu verarbeiten. Es wird betont, daß es vorteilhaft sei, den ersten Verdampfungsprozeß einstufig zu führen (siehe DE-OS 33 15 802, Seite 8, Zeile 25), unabhängig davon, ob die PPE-Lösungen

- in einem Wärmeaustauscher unter Druck erhitzt und dann entspannt werden,
- in einem zonenweise beheizbaren dynamischen Dünnschichtverdampfer geleitet werden,
- in einem beheizbaren Röhrenbündelverdampfer aufkonzentriert werden oder
- in einem zonenweise beheizbaren Fallfilmverdampfer eingeengt werden.

Alle beschriebenen Verfahren haben den Nachteil, entweder die PPE-Lösung unnötigen thermischen Belastungen auszusetzen oder, ausgehend von schwankenden Konzentrationen der verdünnten Lösungen auch zu in ihren höheren Konzentrationen schwankenden PPE-Lösungen zu führen.

Ziel der Erfindung war es, diese Nachteile der Verfahren nach dem Stand der Technik zu vermeiden.

Es wurde jetzt überraschend gefunden, daß man verdünnte 5 bis 15 %ige PPE-Lösungen mit zeitlich schwankender Konzentration sehr schonend zu 50 bis 60 %igen Lösungen aufkonzentrieren kann, wenn man zweistufig arbeitet, wobei in der ersten, im Kreislauf betriebenen Flash-Verdampfungsstufe eine Konzentration von 20 bis 35 % erreicht wird, und wobei in der zweiten Flashverdampfungsstufe, die im geraden Durchgang betrieben wird, die gewünschte Endkonzentration im Bereich zwischen 50 und 60 % erreicht wird.

Der Vergleich des erfindungsgemäßen Beispiels 1 mit den Vergleichsbeispielen A und B zeigt, daß das Produkt nur einer sehr geringen thermischen Belastung unterworfen wird. Das Verfahren ermöglicht es, in der aufkonzentrierten Lösung einen bestimmten PPE-Gehalt vorzugeben.

Als Ausgangsprodukte für das erfindungsgemäße Verfahren werden verdünnte PPE-Lösungen eingesetzt, die nach Abstoppung der PPE-Polykondensation anfallen. Sie enthalten keinen Katalysator mehr. Üblicherweise bestehen sie aus dem Polyphenylenether, d. h. einem Polymeren eines mindestens in einer o-Stellung substituierten Phenols. Üblicherweise eingesetzte monomere Phenole werden beispielsweise in den DE-OSS 32 24 692, 32 24 691, 33 13 864 beschrieben. Gegenstand der DE-OS 33 32 377 ist ein Verfahren zur Reinigung von Polyphenylenethern.

Geeignete Lösemittel für die PPE-Reaktion werden in den soeben aufgeführten deutschen Offenlegungsschriften beschrieben. Besonders bewährt haben sich Toluol und Toluol/Methanol-Mischungen, bei denen der Anteil des Methanols maximal 30 Volumenprozent beträgt.

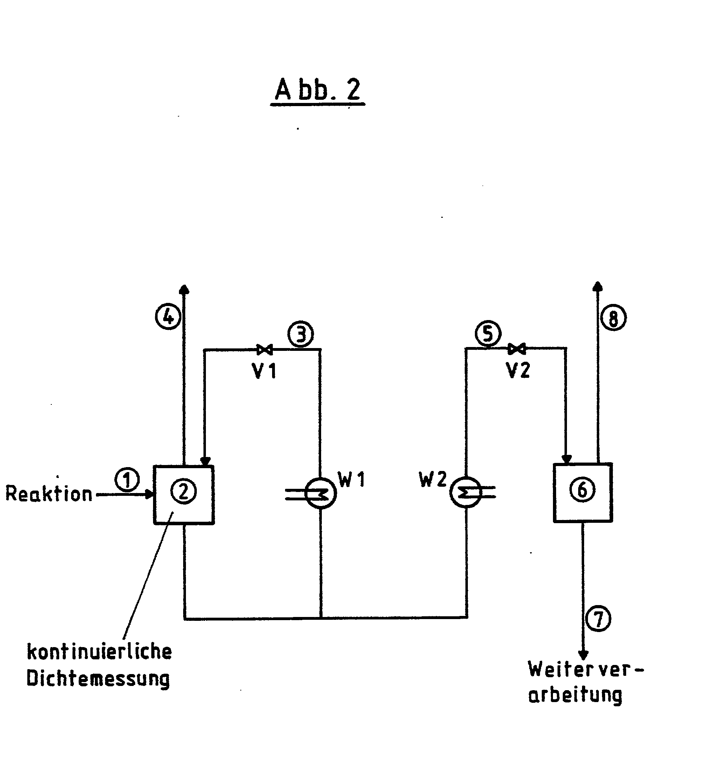

Die erste Flashverdampfungsstufe (Abb. 2) besteht aus einem Verdampfer 2, in den die verdünnte PPE-Lösung kontinuierlich eingespeist wird.

Die Temperatur in dieser ersten Stufe liegt, um das Polymer keiner unnötigen Belastung auszusetzen, maximal 20 °C, vorzugsweise maximal 10 °C, über dem Siedepunkt des Lösemittels oder des Lösemittelgemisches bei Normaldruck. Bei Einsatz von Toluol/Methanol-Gemischen liegt die einzustellende Temperatur beispielsweise bei etwa 115 °C.

Der Verdampferinhalt wird ständig über den Wärmeaustauscher W1 und das Flashventil V1 zurück in den Verdampfer gefahren, wobei durch die Höhe der Umlaufmenge 3 die notwendige Überhitzung auf etwa 10 °C minimiert wird. Die Konzentration an PPE wird z. B. über die Dichte kontinuierlich gemessen und auf den gewünschten Wert zwischen 20 und 35 Gewichtsprozent eingestellt.

Die Lösung der ersten Stufe wird in geradem Durchgang 5 über den Wärmeaustauscher W2 und das Flashventil V2 in den Verdampfer 6 eingegeben. In der zweiten Stufe kann die gewünschte Endkonzentration über die mit W2 eingestellte Überhitzung (< 100 °C) exakt eingestellt werden.

Beispiel 1 (2-stufige Aufkonzentrierung)

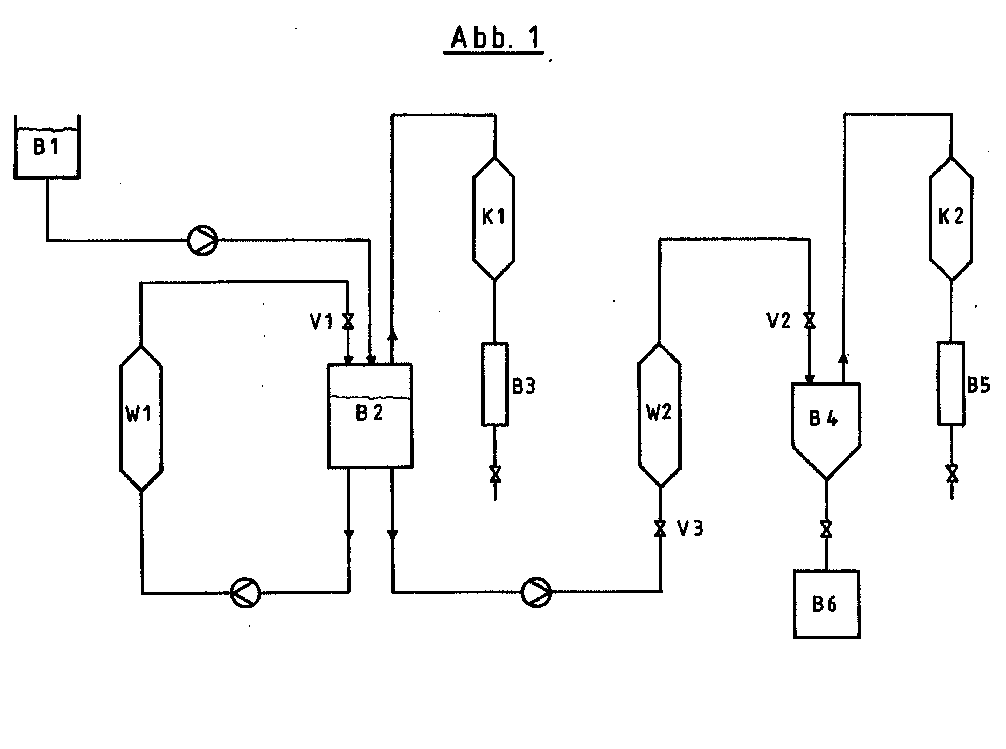

In der in Abbildung 1 dargestellten Anlage werden pro Stunde 24,3 kg einer 11,2 gewichtsprozentigen Lösung von PPE in Toluol in den ersten Flashbehälter B2 eingebracht und bei 112 °C durch ständiges Umpumpen über W1 auf 25,6 Gewichtsprozent PPE aufkonzentriert. Pro Stunde werden 10,6 kg der erhaltenen Lösung über W2 in den Behälter B4 geflasht. Eine 53,7 gewichtsprozentige PPE-Lösung läuft in den Behälter B6 ab.

Vergleichsbeispiel A (1-stufige Aufkonzentrierung)

Pro Stunde werden 24,0 kg einer 11,2 gewichtsprozentigen Lösung von PPE in Toluol in den Behälter B2 eingebracht, bei 180 °C soweit aufkonzentriert, bis eine Konzentration von 54,1 Gewichtsprozent PPE erreicht war und über W2, der jetzt als Kühler benutzt wurde, und B4 mit einer Temperatur von 120 °C in den Behälter B6 geführt.

Vergleichsbeispiel B (Aufkonzentrierung in 2 hintereinandergeschalteten, im geraden Durchgang betriebenen Flashstufen)

Die Aufkonzentrierung einer 11,4 gewichtsprozentigen, toluolischen PPE-Lösung führte zu einer Endkonzentration von 53,9 Gewichtsprozent, während eine 10,1 gewichtsprozentige Ausgangslösung eine Endkonzentration von 47,6 Gewichtsprozent ergab.

Diese Angaben belegen, daß eine Aufkonzentrierung in 2 hintereinandergeschalteten, im geraden Durchlauf betriebenen Flash-Verdampfungsstufen je nach Konzentration der Ausgangslösung auch unterschiedliche Endkonzentrationen ergibt.

Der in Tabelle 1 zusammengestellte Verfahrensvergleich zeigt, daß bei einstufiger Aufkonzentrierung die zeitliche Belastung des Polymeren mehr als doppelt so hoch ist wie beim 2-stufigen Verfahren.

Die Abbildung 1 zeigt eine Versuchsanlage zur ein- und zweistufigen Aufkonzentrierung von toluolischen PPE-Lösungen, wie sie in den Beispielen 1 und A benutzt wurde. Nachstehend seien die in den Abbildungen verwendeten Abkürzungen erläutert:

B 1 Vorlage
B 2 Flashbehälter I (10 kg Betriebsinhalt)
B 3 Kondensatvorlage I
B 4 Flashbehälter II
B 5 Kondensatvorlage II
B 6 Endproduktbehälter
W 1 Wärmeaustauscher 1 (3,5 kg Betriebsinhalt)
W 2 Wärmeaustauscher 2 (1,2 kg Betriebsinhalt)
V 1, V 2, V 3 Ventile
K 1, K 2 Behälter
Die Abbildung 2 zeigt ein Verfahrensschema zur Aufkonzentrierung toluolischer PPE-Lösungen.

## Tabelle 1

| Verfahrensvergleich | zweistufige Auf-konzentrierung (erfindungsgemäß) | einstufige Auf-konzentrierung (gemäß DE-OS 33 15 802) |
|---|---|---|
| Zulaufmenge nach B2 in kg/h | 24,3 | 24,0 |
| PPE-Konzentration im Zulauf in Gew.-% | 11,2 | 11,2 |
| Temperatur in B2 in °C | 112 | 180 |
| mittlere Verweilzeit des PPE in B2 + W1 in Min. | 76 | 163 |
| 10 % des PPE bleiben länger in B2 + W1 als Min. | 175 | 375 |
| PPE-Konzentration in B2 in Gew.-% | 25,6 | 54,1 |
| Zulaufmenge nach B4 in kg/h | 10,6 | 5,0 |
| Temperatur nach W2 in °C | 203 | 120 |
| Verweilzeit in W2 in Minuten | 7 | 15 |
| Temperatur in B4 + B6 in °C | 120 | 120 |
| Zulaufmenge nach B6 in kg/h | 5,0 | 5,0 |
| PPE-Konzentration in B6 in Gew.-% | 53,7 | 54,1 |

EP 0 241 586 B1

## Patentansprüche

1. Verfahren zur kontinuierlichen Herstellung einer PPE-Lösung mit exakt einstellbarer Zusammensetzung zwischen 50 und 60% PPE durch Aufkonzentrierung von PPE-Lösungen, die zeitlich schwankend 5 bis 15 Gew.-% PPE in einem organischen Lösemittel enthalten, dadurch gekennzeichnet, daß man die verdünnte PPE-Lösung in einer ersten im Kreislauf betriebenen Flash-Verdampfungsstufe bei einer Temperatur, die maximal 20 °C über dem Siedepunkt des Lösemittels bei Normaldruck liegt, auf 20 bis 35 Gew.-% aufkonzentriert, und in einer im geraden Durchgang betriebenen zweiten Flash-Verdampfungsstufe auf die gewünschte Endkonzentration bringt.

2. Verfahren nach Anspruch 1, dadurch gekennzeichnet, daß man die Temperatur der Lösung in der ersten Flash-Verdampfungsstufe so einstellt, daß sie maximal 10°C über dem Siedepunkt des Lösemittels bei Normaldruck liegt.

3. Verfahren nach den Ansprüchen 1 oder 2, dadurch gekennzeichnet, daß man als organisches Lösemittel Toluol oder ein Gemisch aus Toluol und – bezogen auf die Mischung – bis zu 30 Volumenprozent Methanol verwendet.

## Claims

1. A process for the continuous production of a PPE solution with a precisely standardisable composition between 50 and 60% of PPE by concentrating PPE solutions which contain a periodically fluctuating figure of 5 to 15 % by weight of PPE in an organic solvent, characterized in that the dilute PPE solution is concentrated to 20 to 35% by weight in a first cyclically operated flash evaporation step at a temperature which is at most 20°C above the boiling point of the solvent at normal pressure, and the resulting PPE solution is brought to the desired final concentration in a second flash evaporation step operated in a straight-through manner.

2. A process according to claim 1, characterized in that the temperature of the solution in the first flash evaporation step is set so that it lies at most 10°C above the boiling point of the solvent at normal pressure.

3. A process according to claim 1 or 2, characterized in that toluene or a mixture of toluene and up to 30 per cent by volume, relative to the mixture, of methanol is used as organic solvent.

## Revendications

1. Procédé pour la préparation en continu d'une solution d'éther polyphénylénique (EPP) avec une composition pouvant être établie de façon précise de 50 à 60% de EPP, par concentration de solutions de EPP qui renferment une quantité temporairement variable de 5 à 15% en. poids de EPP dans un solvant organique, caractérisé par le fait que l'on concentre la solution de EPP diluée dans une première étape d'évaporation flash menée en circulation, à une température située au maximum 20°C au-dessus du point d'ébullition du solvant, à la pression atmosphérique, jusqu'à 20 à 35% en poids, et qu'on l'amène à la concentration finale souhaitée dans une deuxième étape d'évaporation flash menée en ligne.

2. Procédé selon la revendication 1, caractérisé par le fait que l'on établit la température de la solution dans la première étape d'évaporation flash de manière telle qu'elle se situe au maximum 10°C au-dessus du point d'ébullition du solvant à la pression atmosphérique.

3. Procédé selon les revendications 1 ou 2, caractérisé par le fait que l'on utilise comme solvant organique du toluène ou un mélange constitué de toluène et relativement au mélange – d'une quantité allant jusqu'à 30 % en volume de méthanol.

Abb. 1

# Abb. 2

Reaktion

kontinuierliche
Dichtemessung

W 1    W 2

V 1    V 2

Weiterverarbeitung